# EUROPÄISCHE PATENTSCHRIFT

(11) **EP 3 196 606 B1**
(45) Veröffentlichungstag und Bekanntmachung des Hinweises auf die Patenterteilung: **02.06.2021**
(21) Anmeldenummer: 17152445.7
(22) Anmeldetag: 20.01.2017
(51) Int. Cl.: G01F 23/00, G01F 15/00, G01D 7/00, G01D 21/00, G01F 23/284

(54) **AUSGABEVORRICHTUNG FÜR EIN MESSGRÄT SOWIE MESSGERÄT ZUR MESSUNG EINER MESSGRÖSSE**
OUTPUT ASSEMBLY FOR A MEASURING DEVICE AND MEASURING DEVICE FOR MEASURING A MEASUREMENT VALUE
DISPOSITIF DE SORTIE POUR UN APPAREIL DE MESURE ET APPAREIL DE MESURE D'UNE GRANDEUR DE MESURE

(30) Priorität: 21.01.2016 DE 102016101062
(43) Veröffentlichungstag der Anmeldung: 26.07.2017
(73) Patentinhaber: Krohne S.A.S., 26103 Romans-sur-Isere Cedex (FR)
(72) Erfinder: MILHAUD, Vincent, 26000 Valence (FR); GRAILLAT, Denis, 26540 Mours Saint Eusèbe (FR); Pichot, Vincent, 26100 Romans-sur Isère (FR)
(74) Vertreter: Gesthuysen Patentanwälte

(56) Entgegenhaltungen:
- DE-A1- 2 910 582
- DE-A1- 3 440 310
- DE-A1- 4 244 761
- DE-A1- 19 536 199
- DE-A1-102005 055 546
- US-A- 3 157 048
- US-A- 3 601 793
- US-A1- 2013 300 595

## Beschreibung

Die Erfindung betrifft ein Messgerät sowie eine Ausgabevorrichtung für ein Messgerät zur Messung einer Messgröße mit einer Sensorvorrichtung Dabei erzeugt die Ausgabevorrichtung ausgehend von wenigstens einem Sensorsignal der Sensorvorrichtung wenigstens ein Ausgangssignal. Bei der Messgröße, dessen Messwert bei der Messung zu ermitteln ist, handelt es sich beispielsweise um den Füllstand, den Durchfluss, den Massendurchfluss, die Temperatur, den pH-Wert oder die Leitfähigkeit eines Mediums. Wird eine Messgröße eines Mediums ermittelt, so handelt es sich bei dem Medium beispielsweise um ein Schüttgut oder um eine Flüssigkeit.

Messgeräte dienen in der modernen Prozessautomatisierung dazu, um ausgehend von den ermittelten Messgrößen Prozesse zu steuern oder zu überwachen. Für die weitere Betrachtung seien Messgeräte in zwei Komponenten: Sensor- und Ausgabevorrichtung unterteilt.

Die Sensorvorrichtung erzeugt ein von der Messgröße abhängiges Sensorsignal, das von der Ausgabevorrichtung zu einem Messwert verrechnet wird oder das zumindest in ein passendes Datenformat für das verwendete Datenprotokoll übertragen wird. So lässt sich beispielsweise aus der Laufzeit eines elektromagnetischen Signals der Füllstand eines Mediums ermitteln oder aus einem Phasenversatz wird der Durchfluss eines Mediums gewonnen.

Für die Ausgangssignale sind unterschiedliche Protokolle und auch unterschiedliche technische Signalträger bekannt. Bekannt sind beispielsweise Strom-, Frequenz- oder Impulsausgänge. So sind beispielsweise sogenannte Stromsignale bekannt, bei denen über die Stromstärke, die innerhalb eines bestimmten Bereichs (zumeist zwischen 4 mA und 20 mA) liegt, der Messwert für die Messgröße übermittelt wird. Es ist auch bekannt, Relais zu schalten, um das Erreichen oder Unterschreiten eines vorgegebenen Grenzwerts anzuzeigen. Im letzten Fall handelt es sich bei den Messgeräten um sogenannte Grenzstandschalter .

Viele Messgeräte erlauben eine kontinuierliche Messung einer Messgröße und können gleichzeitig auch als Grenzstandschalter dienen, wenn nur die Information relevant ist, dass ein bestimmter Wert der Messgröße erreicht oder unterschritten worden ist. Die Information, dass ein Grenzstand erreicht bzw. nicht erreicht ist, ist dann beispielsweise ein von dem eigentlichen Sensorsignal abgeleitetes Signal. Je nach Zweck werden die Messgeräte mit passenden Ausgabevorrichtungen versehen, wobei die Sensorvorrichtung jeweils gleich sein kann. Dies macht jedoch mehrere Ausgabevorrichtungen erforderlich und es ist jeweils nur eine Anwendung möglich.

Das Dokument DE 4244761 A1 offenbart eine Ausgabevorrichtung für ein Messgerät gemäß dem Stand der Technik.

Der Erfindung liegt die Aufgabe zugrunde, eine Ausgabevorrichtung für ein Messgerät vorzuschlagen, welche flexibel in Bezug auf die Signalausgabe ist.

Die Ausgabevorrichtung gemäß dem angefügten unabhängigen Patentanspruch 1, bei der die Aufgabe gelöst ist, ist dadurch gekennzeichnet, dass sie mindestens zwei Signalausgänge zur Ausgabe des wenigstens einen Ausgangssignals aufweist. Durch diese Maßnahme wird ein erhebliches Maß an Flexibilität erreicht, obwohl nur eine Ausgabevorrichtung in dem Messgerät realisiert ist. Es kann mit dem so ausgestalteten Messgerät eine Vielzahl von Anwendungsfällen realisiert werden, die Gegenstand der nachfolgenden Ausgestaltungen sind.

Es ist vorgesehen, dass die zwei Signalausgänge der Ausgabe von Ausgangssignalen unterschiedlicher Signaltypen dienen. Die Ausgabevorrichtung erlaubt es demnach, das Ausgangssignal (oder verschiedene Ausgangssignale) in der Form von mindestens zwei unterschiedlichen Signaltypen auszugeben. Das Messgerät kann daher beispielsweise in zwei unterschiedlichen Modi betrieben werden: z. B. für die kontinuierliche Messung der Messgröße oder alternativ als Grenzstandschalter. Oder das Messgerät kann über zwei unterschiedliche Protokolle den Messwert ausgeben. Insgesamt erlaubt das Messgerät die einfache Umstellung der Art der Signalausgabe, indem der jeweils erforderliche Signaltyp ausgewählt wird.

Es handelt sich bei den zwei unterschiedlichen Signaltypen um analoge Signale und um digitale Signale. Ein erster Signalausgang dient der Ausgabe von analogen Signalen und ein zweiter Signalausgang dient der Ausgabe von digitalen Signalen. Es handelt sich bei dem analogen Signal um ein Stromsignal und bei dem digitalen Signal um ein zweiwertiges digitales Signal, also um ein Binärsignal. Die Stromsignale sind dabei die aus dem Stand der Technik bekannten Signale, über deren Stromstärke der Messwert ausgegeben wird. Die Binärsignale sind die Signale, über die beispielsweise übermittelt wird, ob ein Grenzstand erreicht ist oder nicht.

In einer Ausgestaltung dient der erste Signalausgang, über den die Stromsignale ausgegeben werden, der Energieversorgung der Ausgabevorrichtung. In einer Ausgestaltung wird über den ersten Signalausgang auch die Energieversorgung des gesamten Messgeräts realisiert. In einer alternativen Ausgestaltung ist vorgesehen, dass die Sensorvorrichtung separat von der Ausgabevorrichtung mit Energie versorgt ist.

Um das Binärsignal zu erzeugen, ist vorgesehen, dass der zweite Signalausgang mindestens ein Relais aufweist. Ferner ist vorgesehen, dass das Relais über eine Spule verfügt und dass die Spule in Reihe mit dem ersten Signalausgang geschaltet ist.

In einer Ausgestaltung ist mindestens eine Umsetzvorrichtung vorhanden. Dabei ist die Umsetzvorrichtung derartig ausgestaltet, dass sie das Sensorsignal empfängt und das Ausgangssignal erzeugt. In einer Ausgestaltung ist die Umsetzvorrichtung derartig ausgestaltet, dass sie das Ausgangssignal erzeugt, indem sie einen Stromwert einstellt. Die Höhe des Stromwerts hängt dabei davon ab, als welcher Signaltyp das Ausgangssignal erzeugt werden soll. So stellt die Umsetzvorrichtung in dem Fall, dass das Ausgangssignal als analoges Stromsignal auszugeben ist, einen Stromwert innerhalb eines vorgebbaren Strombereichs (z. B. zwischen 4 mA und 20 mA) ein. Soll das Ausgangssignal als Binärsignal ausgegeben werden, so stellt die Umsetzvorrichtung einen Stromwert außerhalb des vorgenannten Strombereichs ein.

Eine weitere Ausgestaltung widmet sich der Problematik, dass besonders für sicherheitskritische Anwendungen die Messgeräte sich selbst überwachen und dabei auch selbst feststellen sollen, ob die ausgegebenen Signale als Ist-Signale gleich den auszugebenden Signalen als Soll-Signalen sind oder die Abweichung zumindest innerhalb eines vorgebbaren Toleranzbereichs liegt. So ist es insbesondere bei den Stromsignalen bekannt, diese als Ist-Signale rück zu lesen, d. h. die ausgegebene Stromstärke zu messen und mit dem vorgegebenen Soll-Wert zu vergleichen.

Daher ist einer Ausgestaltung mindestens eine Rücklesevorrichtung vorgesehen, über die das ausgegebene Ausgangssignal rückgelesen wird und die die Stromstärke des rückgelesenen Ausgangssignals in eine Frequenz eines PWM-Signals umwandelt. Das PWM-Signal wird in der folgenden Ausgestaltung zusätzlich als Informationsträger verwendet. Dafür ist eine Signalmodifizierungsvorrichtung zum Modifizieren des PWM-Signals vorhanden, die einen Duty-Cycle des PWM-Signals vorgibt. In einer Ausgestaltung ist die Signalmodifizierungsvorrichtung mit dem Relais des zweiten Signalausgangs verbunden. Die Verbindung ist dabei insbesondere derart, dass der Zustand des Relais sich auf die Signalmodifizierungsvorrichtung bzw. auf das Arbeiten der Signalmodifizierungsvorrichtung auswirkt. So hängt in einer Ausgestaltung die Vorgabe des Duty-Cycles durch die Signalmodifizierungsvorrichtung davon ab, welches binäre Signal der zweite Signalausgang ausgibt.

Im Einzelnen gibt es nun eine Vielzahl von Möglichkeiten, die Erfindung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: eine schematische Darstellung eines Messgeräts einer nicht erfindungsgemäßen Variante,
- Fig. 2: eine schematische Darstellung einer erfindungsgemäßen Variante des Messgeräts und
- Fig. 3: eine schematische Darstellung eines Teils einer weiteren erfindungsgemäßen Variante eines Messgeräts.

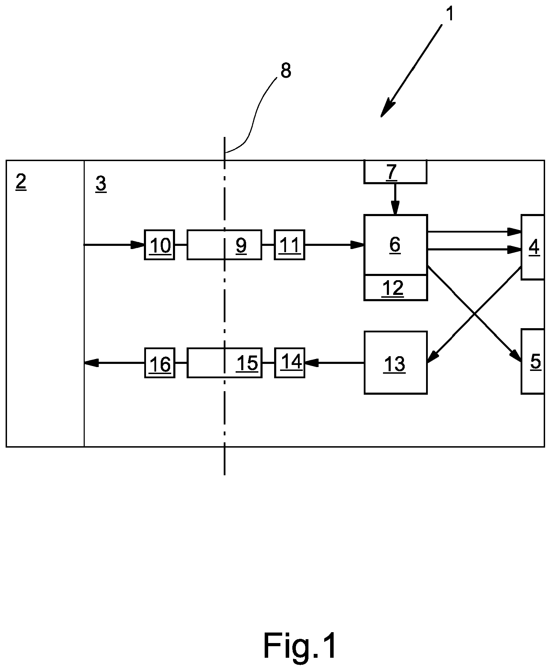

In der Fig. 1 ist schematisch 2. ein nicht erfindungsgemäßes Messgerät 1 teilweise in der Art eines Blockschaltbilds dargestellt. Die damit ermittelte Messgröße ist als Beispiel der Füllstand eines - hier nicht dargestellten - Mediums, der nach dem Laufzeitverfahren über geführte Mikrowellen bestimmt wird.

Für die eigentliche Messung ist eine Sensorvorrichtung 2 vorgesehen, die ausgehend von einer Messung ein Sensorsignal erzeugt. Die der Sensorvorrichtung 2 vorgelagerte Ausgabevorrichtung 3 empfängt das Sensorsignal und erzeugt ein Ausgangssignal, das beispielsweise an eine übergeordnete - hier nicht dargestellte - Leitwarte oder eine andere Peripherie übermittelt wird.

Für die Ausgabe des Ausgangssignals sind zwei Signalausgänge 4, 5 vorhanden, die die Ausgabe von zwei unterschiedlichen Signaltypen erlauben. Der erste Signalausgang 4 erlaubt die Ausgabe von Stromsignalen und dient dabei auch der Stromversorgung der Ausgabevorrichtung 3, indem sich eine Stromschleife ergibt. Stromsignale sind standardisierte Signale, bei denen durch die Stromstärke - insbesondere zwischen den Grenzwerten 4 mA und 20 mA - Informationen kommuniziert werden. Der zweite Signalausgang 5 ermöglicht die Ausgabe von sogenannten Binärsignalen. Es handelt sich quasi um ein Ja/Nein-Signal. Damit wird beispielsweise übermittelt, ob ein vorgegebener Grenzstand überschritten worden ist.

Die Erzeugung des Ausgangssignals und die Verwendung des passenden Signalausgangs 4, 5 wird von einer Umsetzvorrichtung 6 vorgenommen, die das Sensorsignal von der Sensorvorrichtung 2 empfängt. Um was für einen Signaltyp es sich bei dem Ausgangssignal handeln soll, wird hier durch eine Einstellvorrichtung 7 vorgegeben. Über die Einstellvorrichtung 7 wird somit auf die Umsetzvorrichtung 6 eingewirkt und insbesondere kann der Signaltyp ausgewählt werden. Ist der Typ Binärsignale als Signaltyp ausgewählt worden, so wird in dem gezeigten Ausführungsbeispiel über die Einstellvorrichtung 7 auch ein Grenzwert vorgegeben, relativ zu dem die Sensorsignale von der Umsetzvorrichtung 6 verarbeitet werden. Die Umsetzvorrichtung 6 erzeugt in der dargestellten Ausgestaltung somit aus dem Sensorsignal entweder ein 4...20 mA-Signal als Stromsignal oder durch den Vergleich mit einem vorgebbaren Grenzwert ein Binärsignal. Die Ausgabe der so erzeugten Ausgangssignale erfolgt dann über den ersten Signalausgang 4 bzw. den zweiten Signalausgang 5.

Das Sensorsignal wird über eine galvanische Trennung 8, die hier durch die Ausgabevorrichtung 3 verläuft, hinweg und über einen Optokoppler 9 übertragen. Dabei wird die sogenannte Pulsweitenmodulation verwendet und ein sogenanntes PWM-Signal erzeugt und übertragen. Ein PWM-Signal ist ein Rechtecksignal mit fester Periodendauer, das zwischen zwei verschiedenen Spannungspegeln oszilliert; das Signal wird quasi in schneller Folge ein- und ausgeschaltet. Das Signal ist dabei durch zwei Werte gekennzeichnet: Das Tastverhältnis - der sogenannte Duty-Cycle - beschreibt den Anteil der Zeit, in der das Signal eingeschaltet ist, also auf einem höheren Wert liegt, relativ zur Periodendauer. Die Frequenz beschreibt die Geschwindigkeit des Wechsels zwischen beiden Niveaus. Das PWM-Signal wird durch eine Signal-Formungsvorrichtung 10 aus dem digitalen Sensorsignal der Sensorvorrichtung 2 erzeugt, vermittels des Optokopplers 9 übertragen und durch eine Signal-Umformungsvorrichtung 11 wieder in ein digitales Signal umgewandelt.

Die Energieversorgung der Komponenten der Ausgabevorrichtung 3 auf der Seite der galvanischen Trennung 8, die die beiden Signalausgänge 4, 5 umfasst, wird durch den ersten Signalausgang 4 sichergestellt. Hiermit steht auch eine Spannungsregulierungsvorrichtung 12 in Wirkverbindung, über die die maximal erforderliche Stromversorgung der - teilweise nicht dargestellten - Komponenten auf maximal 1 mA geregelt wird. In der dargestellten Ausführung verfügt die Sensorvorrichtung 2 über eine eigene - hier nicht dargestellte - Energieversorgung.

Zusätzlich ist noch eine Rücklesevorrichtung 13 vorgesehen, über die das an dem ersten Signalausgang 4 anliegende Stromausgangssignal zurückgelesen wird. Das zurückgelesene Signal wird über die galvanische Trennung 8 zur Sensorvorrichtung 2 übertragen. Dabei wird das Signal in Form eines PWM-Signals übertragen, wobei eine Signal-Formungsvorrichtung 14, ein Optokoppler 15 sowie eine Signal-Umformungsvorrichtung 16 Verwendung finden. In der Sensorvorrichtung 2 wird das übertragene zurückgelesene Signal mit dem eigentlichen Sensorsignal als Soll-Signal verglichen.

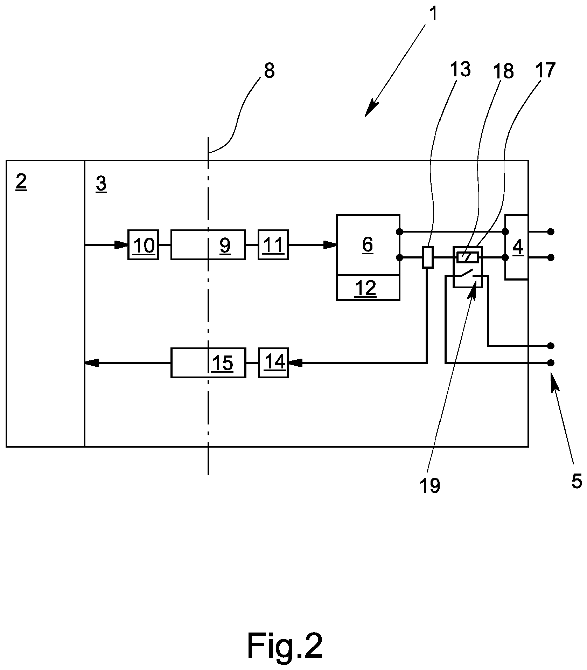

Das Messgerät 1 der in der Fig. 2 dargestellten ,erfindungsgemäßen Variante verfügt ebenfalls über eine Sensorvorrichtung 2, die ein Sensorsignal an die Ausgabevorrichtung 3 übermittelt, damit daraus ein Ausgangssignal erzeugt wird.

Das Sensorsignal wird über die galvanische Trennung 8 in Form eines PWM-Signals übertragen. Hierfür werden die Signal-Formungsvorrichtung 10, der Optokoppler 9 und die Signal-Umformungsvorrichtung 11 verwendet. Es wird also aus dem Sensorsignal ein PWM-Signal erzeugt, über den Optokoppler 9 übertragen und dann wieder in ein digitales Signal umgewandelt. Die Umsetzvorrichtung 6 empfängt das Sensorsignal und erzeugt - in Abhängigkeit vom gewählten Signaltyp - über den ersten Signalausgang 4 ein Stromsignal oder über das Relais 17 am zweiten Signalausgang 5 ein Binärsignal. Für die Erzeugung des Binärsignals vergleicht die Umsetzvorrichtung 6 die Information des Sensorsignals mit einem vorgegebenen Grenzwert.

Zwischen der Umsetzvorrichtung 6 und dem ersten Signalausgang 4 sind zwei Leitungen vorgesehen, die der Erzeugung der für die Ausgabe des Stromsignals erforderlichen Stromschleife dienen. Entlang einer der Leitungen und damit in Reihe ist die Spule 18 des Relais 17 geschaltet. Damit ist der Steuerstromkreis des Relais 17 innerhalb dieser Verbindung zwischen der Umsetzvorrichtung 6 und dem ersten Signalausgang 4 vorgesehen.

Über den ersten Signalausgang 4 wird auch die Energieversorgung der Ausgabevorrichtung 3 realisiert. Die Energieversorgung ist beispielsweise derartig, dass eine Spannung von 24 V für das Messgerät 1 erforderlich ist. Durch die Spannungsregulierungsvorrichtung 12 wird sichergestellt, dass die Komponenten der Ausgabevorrichtung 3 einen maximalen Strombedarf nicht überschreiten. Dies ist beispielsweise ein Wert von 1 mA. Wird durch das Stromsignal von Seiten der Stromschleife der Ausgabevorrichtung 3 ein höherer Strom zur Verfügung gestellt, so wird er in der dargestellten Ausgestaltung von der Spannungsregulierungsvorrichtung 12 in Wärme umgewandelt.

Erzeugt die Umsetzvorrichtung 6 ein Stromsignal als Ausgangssignal, dessen Stromstärke entsprechend zwischen 4 mA und 20 mA als vorgebbarem Strombereich liegt, so reagiert die Spule 18 des Relais 17 nicht und schaltet nicht den Laststromkreis 19.

Soll ein Binärsignal als Ausgangssignal für den zweiten Signalausgang 5 erzeugt werden, so ermittelt die Umsetzvorrichtung 6 ausgehend vom Sensorsignal und dem vorgebbaren Grenzwert, ob eine logische Eins oder eine logische Null ausgegeben werden soll. Es wird also ermittelt, ob der Messwert oberhalb oder unterhalb des Grenzwerts liegt. Davon ausgehend schaltet die Umsetzvorrichtung 6 einen Strom, der entweder unterhalb der 4 mA-Untergrenze der Stromsignale (z. B. 1 mA) oder oberhalb der 20 mA-Obergrenze der Stromsignale (z. B. 40 mA oder 30 mA) liegt. Insbesondere der obere Stromwert - hier die 40 mA bzw. 30 mA - ist so bemessen, dass die Spule 18 des Relais 17 reagiert und der Laststromkreis 19 entsprechend geschaltet wird. Der Laststromkreis 19 ist damit insbesondere auch Teil des zweiten Signalausgangs 5.

Die Ausgabe von zwei unterschiedlichen Signaltypen wird insgesamt derartig realisiert, dass entweder ein Strom - vorzugsweise linear - zwischen 4 mA und 20 mA (als einem Beispiel für den Strombereich) eingestellt wird oder dass ein Stromwert eingestellt wird, der außerhalb dieses Strombereichs - vorzugsweise 1 mA und 40 mA oder 30 mA - liegt. Der untere Wert ist dabei der Ruhestrom, den insbesondere die Ausgabevorrichtung 3 zum Betrieb benötigt. Der obere Wert ist insbesondere derartig vorgegeben, dass damit die Spule 18 des Relais 17 geschaltet wird.

Die Rücklesevorrichtung 13 ist in Reihe zwischen der Umsetzvorrichtung 6, der Spule 18 des Relais 17 und der Stromschleife des ersten Signalausgangs 4 angeordnet. Die Rücklesevorrichtung 13 liest den am ersten Signalausgang 4 anliegenden Strom rück und überträgt die Stromstärke des Ausgangssignals in die Frequenz des PWM-Signals, das an die Sensorvorrichtung 2 übermittelt wird.

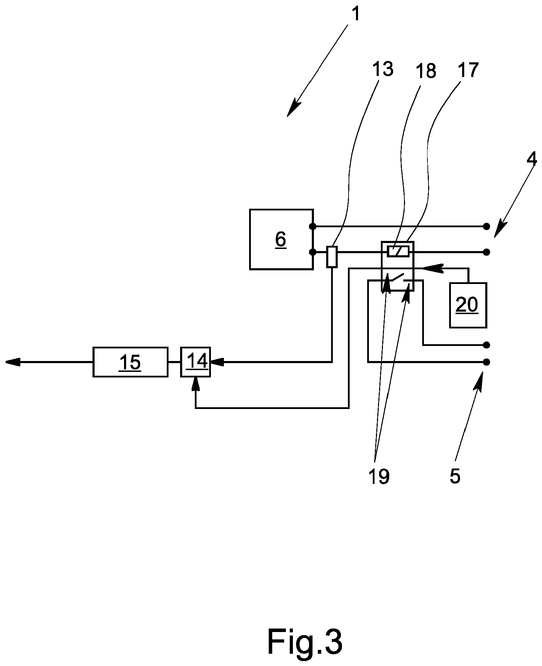

In der Fig. 3 ist für die Übersichtlichkeit nur ein Teil eines Messgeräts dargestellt. In einer Erweiterung der Ausgestaltung des Messgeräts der Fig. 2 wird nicht nur das Ausgangssignal des ersten Signalausgangs 4, sondern auch der zweite Signalausgang 5 überwacht.

Das Relais 17 verfügt hier über zwei Laststromkreise 19, die entsprechend durch die Spule 18 geschaltet werden. Der untere Laststromkreis 19 ist Teil des zweiten Signalausgangs 5 und der obere Laststromkreis 19 ist ein Teil der Überwachung der Ausgangssignale bzw. der Überwachung der Komponenten, die der Signalausgabe dienen.

Für den letztgenannten Zweck ist zusätzlich eine Signalmodifizierungsvorrichtung 20 vorgesehen, die sich über den - hier zeichnerisch oberen - Laststromkreis 19 auf die Signal-Formungsvorrichtung 14 auswirkt. Dabei ist die Verbindung der Signalmodifizierungsvorrichtung 20 zu der Signal-Formungsvorrichtung 14 abhängig von der Beschaltung des Relais 17, d. h. in Abhängigkeit vom Zustand des Relais 17 besteht die Verbindung oder ist sie unterbrochen. Daher erlaubt das zu der Sensorvorrichtung 2 übertragene PWM-Signal relativ einfach und zuverlässig die Übertragung des Zustands des Relais 17 als zusätzliche Information. Die Signalmodifizierungsvorrichtung 20 wirkt sich dabei im gezeigten Beispiel auf den Duty-Cycle des PWM-Signals aus. Mit anderen Worten: Je nach Zustand des Relais 17 zeigt sich die Auswirkung der Signalmodifizierungsvorrichtung 20 auf das PWM-Signal, so dass umgekehrt aus dem PWM-Signal auf den Zustand geschlossen werden kann.

Hinter dem Optokoppler 15 ergibt sich daher aus der Frequenz des PWM-Signals als Träger der Information des rückgeführten Ausgabesignals eine Aussage über den am ersten Signalausgang 4 anliegenden Strom und ergibt sich aus dem Duty-Cycle eine Aussage darüber, in welchem Zustand sich das Relais 17 befindet. Die zwei kennzeichnenden Größen des PWM-Signals werden daher zur Übermittlung von zwei Werten verwendet.

## Patentansprüche

1. Ausgabevorrichtung (3) für ein Messgerät zur Messung einer Messgröße, wobei die Ausgabevorrichtung (3) ausgebildet ist, ausgehend von wenigstens einem Sensorsignal einer Sensorvorrichtung eines Messgeräts (1) wenigstens ein Ausgangssignal zu erzeugen und
wobei die Ausgabevorrichtung (3) mindestens zwei Signalausgänge (4, 5) zur Ausgabe des wenigstens einen Ausgangssignals aufweist,
wobei zweite Signalausgang (5) mindestens ein Relais (17) aufweist und wobei die zwei Signalausgänge (4, 5) der Ausgabe von Ausgangssignalen unterschiedlicher Signaltypen dienen
**dadurch gekennzeichnet, dass** es sich bei den zwei unterschiedlichen Signaltypen um analoge Signale und um digitale Signale handelt, wobei der erste Signalausgang (4) der Ausgabe von analogen Signalen dient und wobei der zweite Signalausgang (5) der Ausgabe von digitalen Signalen dient, wobei es sich bei dem analogen Signal um ein Stromsignal und handelt und wobei es sich bei dem digitalen Signal um ein zweiwertiges digitales Signal, also um ein Binärsignal, handelt,
und dass eine Spule (18) des Relais (17) in Reihe mit dem ersten Signalausgang (4) geschaltet ist.

2. Ausgabevorrichtung (3) nach Anspruch 1, **dadurch gekennzeichnet, dass** der erste Signalausgang (4) der Energieversorgung der Ausgabevorrichtung (3) dient.

3. Ausgabevorrichtung (3) nach Anspruch 1 oder 2, **dadurch gekennzeichnet, dass** mindestens eine Umsetzvorrichtung (6) vorhanden ist, wobei die Umsetzvorrichtung (6) das Sensorsignal empfängt und das Ausgangssignal erzeugt, indem die Umsetzvorrichtung (6) einen Stromwert einstellt, wobei die Umsetzvorrichtung (6) in dem Fall, dass das Ausgangssignal als Stromsignal auszugeben ist, einen Stromwert innerhalb eines vorgebbaren Strombereichs einstellt, und wobei die Umsetzvorrichtung (6) in dem Fall, dass das Ausgangssignal als Binärsignal auszugeben ist, einen Stromwert außerhalb des vorgebbaren Strombereichs einstellt.

4. Ausgabevorrichtung (3) nach einem der Ansprüche 1 bis 3, **dadurch gekennzeichnet, dass** mindestens eine Rücklesevorrichtung (13) vorhanden ist, die mindestens eine Stromstärke des von der Ausgabevorrichtung (3) ausgegebenen Ausgangssignals in eine Frequenz eines PWM-Signals umwandelt.

5. Ausgabevorrichtung (3) nach Anspruch 4, **dadurch gekennzeichnet, dass** eine Signalmodifizierungsvorrichtung (20) vorhanden ist, die einen Duty-Cycle des PWM-Signals vorgibt.

6. Ausgabevorrichtung (3) nach Anspruch 5, **dadurch gekennzeichnet, dass** die Signalmodifizierungsvorrichtung (20) mit dem Relais (17) des zweiten Signalausgangs (5) verbunden ist.

7. Messgerät zur Messung einer Messgröße mit einer Sensorvorrichtung und mit einer Ausgabevorrichtung,
wobei die Ausgabevorrichtung ausgehend von wenigstens einem Sensorsignal der Sensorvorrichtung wenigstens ein Ausgangssignal erzeugt,
**dadurch gekennzeichnet,**
**dass** die Ausgabevorrichtung nach einem der Ansprüche 1 bis 6 ausgebildet ist.

8. Messgerät (1) nach Anspruch 7, **dadurch gekennzeichnet, dass** die Sensorvorrichtung (2) separat von der Ausgabevorrichtung (3) mit Energie versorgt ist.

## Claims

1. Output device (3) for a measuring device for measuring a measuring variable, wherein the output device (3) is designed to generate at least one output signal based on at least one sensor signal of the sensor device of a measuring device (1) and wherein the output device has at least two signal outlets (4, 5) for output of the at least one output signal, wherein the second signal outlet (5) has at least one relay (17) and wherein the two signal outlets (4, 5) are used for the output of output signals of different signal types,
**characterized in**
**that** the two different types of signals are analog signals and digital signals, wherein the first signal outlet (4) is used for the output of analog signals and wherein the second signal outlet (5) is used for the output of digital signals, wherein the analog signal is a current signal and wherein the digital signal is a digital signal with two values, i.e. a binary signal and that a coil (18) of the relay (17) is connected in series with the first signal outlet (4).

2. Output device (3) according to claim 1, **characterized in that** the first signal outlet (4) is used for energy supply of the output device (3).

3. Output device (3) according to claim 1 or 2, **characterized in that** at least one transformation device (6) is present, wherein the transformation device (6) receives the sensor signal and generates the output signal **in that** the transformation device (6) sets a current value, wherein, in the case that the output signal is to be output as current signal, the transformation device (6) sets a current value within a given current range, and wherein, in the case that the output signal is to be output as binary signal, the transformation device (6) sets a current value outside the given current range.

4. Output device (3) according to any one of claims 1 to 3, **characterized in that** at least one read-back device (13) is present, which converts at least one current strength of the output signal output by the output device (3) into a frequency of a PWM signal.

5. Output device (3) according to claim 4, **characterized in that** a signalmodifying device (20) is present that provides a duty cycle of the PWM signal.

6. Output device (3) according to claim 5, **characterized in that** a signalmodifying device (20) is connected to the relay (17) of the second signal outlet (5).

7. Measuring device for measuring a measuring variable with a sensor device and having an output device,
wherein the output device generates at least one output signal based on at least one sensor signal of the sensor device
**characterized in**
the output device is designed according to any one of claims 1 to 6.

8. Measuring device (1) according to claim 7, **characterized in that** the sensor device (7) is supplied with energy separately from the output device (3).

## Revendications

1. Dispositif de délivrance (3) pour un appareil de mesure destiné à mesurer une grandeur de mesure, le dispositif de sortie (3) étant configuré pour, à partir d'au moins un signal de capteur d'un dispositif capteur d'un appareil de mesure (1), générer au moins un signal de sortie et
le dispositif de délivrance (3) possédant au moins deux sorties de signal (4, 5) destinées à délivrer l'au moins un signal de sortie,
la deuxième sortie de signal (5) comportant au moins un relais (17) et
les deux sorties de signal (4, 5) servant à délivrer des signaux de sortie de différents types de signaux, **caractérisé en ce que**
les différents types de signaux sont des signaux analogiques et des signaux logiques,
la première sortie de signal (4) servant à délivrer des signaux analogiques et la deuxième sortie de signal (5) servant à délivrer des signaux logiques,
le signal analogique étant un signal de courant et le signal logique étant un signal bivalent, c'est-à-dire un signal binaire,
et **en ce qu'**une bobine (18) du relais (17) est branchée en série avec la première sortie de signal (4).

2. Dispositif de délivrance (3) selon la revendication 1, **caractérisé en ce que** la première sortie de signal (4) sert à l'alimentation en énergie du dispositif de délivrance (3).

3. Dispositif de délivrance (3) selon la revendication 1 ou 2, **caractérisé en ce qu'**au moins un dispositif de conversion (6) est présent, le dispositif de conversion (6) recevant le signal de capteur et générant le signal de sortie **en ce que** le dispositif de conversion (6) règle une valeur de courant, le dispositif de conversion (6), dans le cas où le signal de sortie doit être délivré sous la forme d'un signal de courant, réglant une valeur de courant au sein d'une plage de courant pouvant être prédéfinie et le dispositif de conversion (6), dans le cas où le signal de sortie doit être délivré sous la forme d'un signal binaire, réglant une valeur de courant en dehors de la plage de courant pouvant être prédéfinie.

4. Dispositif de délivrance (3) selon l'une des revendications 1 à 3, **caractérisé en ce qu'**au moins un dispositif de relecture (13) est présent, lequel convertit au moins une intensité de courant du signal de sortie délivré par le dispositif de délivrance (3) en une fréquence d'un signal PWM.

5. Dispositif de délivrance (3) selon la revendication 4, **caractérisé en ce qu'**un dispositif de modification de signal (20) est présent, lequel prédéfinit un rapport cyclique du signal PWM.

6. Dispositif de délivrance (3) selon la revendication 5, **caractérisé en ce que** le dispositif de modification de signal (20) est relié au relais (17) de la deuxième sortie de signal (5).

7. Appareil de mesure destiné à mesurer une grandeur de mesure, comprenant un dispositif capteur et comprenant un dispositif de délivrance,
le dispositif de délivrance générant au moins un signal de sortie à partir d'au moins un signal de capteur du dispositif capteur,
**caractérisé en ce**
**que** le dispositif de délivrance est configuré selon l'une des revendications 1 à 6.

8. Appareil de mesure (1) selon la revendication 7,
**caractérisé en ce que** le dispositif capteur (2) est alimenté en énergie séparément du dispositif de délivrance (3).
